# EUROPEAN PATENT SPECIFICATION

(11) **EP 2 275 978 B1**
(45) Date of publication and mention of the grant of the patent: **09.12.2015**
(21) Application number: 08009384.2
(22) Date of filing: 21.05.2008
(51) Int. Cl.: G06K 19/077

(54) **Method of making composites webs of record members and record members made thereby**
Verfahren zur Herstellung von Datenträgern auf einer Materialbahn
Procédé de fabrication dee puces électroniques dans une feuille de matière

(30) Priority: 23.05.2007 US 805444
(43) Date of publication of application: 19.01.2011
(73) Proprietor: Paxar Americas, Inc., Miamisburg, Ohio 45342 (US)
(72) Inventor: Bauer, Richard K., Beaverscreek OH 45440 (US)
(74) Representative: von Hellfeld, Axel

(56) References cited:
- EP-A- 1 452 999
- WO-A-2005/098748
- WO-A-2007/034328
- US-A1- 2003 136 503
- US-A1- 2004 188 010
- US-A1- 2005 091 821
- US-A1- 2006 049 947

## Description

### Background

### Field

An embodiment relates to the field of making circuit-containing record members.

### Brief Description of the Prior Art

International Patent Application Publication WO 2007/034328 discloses a prior art system or method in which a web is comprised of two layers between which lie longitudinally-spaced radio-frequency identification devices (RFID(s)). The longitudinally-spaced RFID(s) are arranged in a single column of devices within the web. Furthermore, because the devices are inherently concealed within the enclosing web layers, positional markings exist on the web to identify the locations of the longitudinally-spaced RFID(s) at associated or corresponding points on the web.

International Patent Application Publication WO 2005/098748 discloses applying integrated circuits into a structured plastic film grid which is then embedded into security paper.

United States Patent Application Publication US 2004/0188010 discloses making Identification bands by dispensing one or more RFID inlets between two plastic layers to form a continuous strip which is then separated into multiple bracelets.

United States Patent Application Publication US 2005/0091821 discloses a single web containing RFID(s) in which there are two connected web portions which are folded over upon each other.

European Patent Application Publication EP 1 452 999 discloses a system and method for the manufacture of electronic film or foil components, such as, for example, transponders, successively in a web.

The following U.S. patent documents are made of record: U.S. Patent 7,109,867 and Pub. No. US2003/0136503.

It is known to make composite webs of record members, wherein each record member contains a single circuit such as a transponder, and wherein the circuits are arranged in web form. The circuit-containing web is fed onto a vacuum drum where it slips as the drum rotates until the circuit-containing web is released. A knife cooperating with and against the vacuum drum severs the endmost circuit from the circuit-containing web and the severed circuits are transported partially around the drum from which the circuits are successively blown onto an adhesive-coated web moving at the peripheral speed of the vacuum drum so that there is one circuit per record member along the web.

### Summary

According to an embodiment, webs of dissimilar circuits in web form are cut into individual circuits and the individual circuits are registered with each other in sets of circuits so that equally spaced circuit sets are applied to a web to provide record members wherein there is one circuit set in or for each record member.

An embodiment of a method of making composite webs of record members includes advancing sets of circuits along a path wherein the circuits of each set are registered with each other, and adhesively adhering the sets to a web at locations along the web. The circuits can be dissimilar such as being of different types of RFID and/or EAS circuits, and the pitches, sizes or shapes of the circuits of a set can differ.

An embodiment of a method of making composite webs includes providing sets of circuits having different pitches, wherein the circuits of each set are registered with each other, advancing the sets along a path, and adhering the sets to a web at locations along the web.

In accordance with an embodiment, there is created a longitudinally extending composite web of record members having two or more circuits per record member. The circuits are initially arranged in longitudinally spaced sets of two or more circuit webs. The circuits have different pitches. The circuits can have different shapes and/or they can be of different types, for example, one circuit of the set can be an RFID circuit and another can be an EAS circuit. Alternatively, one circuit can comprise a UHF transponder and one or more other circuits can comprise HF transponders. Alternatively, the circuits for each record member can be the same, that is, they can have the same characteristics. If desired, a wide composite web with multiple circuits per record member can be slit into narrower webs having one circuit per record member per narrow web.

### Brief Description of the Diagrammatic Drawings

FIGURE 1 is a top plan view of a record member in the form of a tag having a plurality of circuits;
FIGURE 2 is a left end elevational view of the tag shown in FIGURE 1;
FIGURE 3 is a top plan view of the tag before its tag portions are folded upon each other;
FIGURE 4 is a top plan view of a web of tags having a release liner adhered thereto;
FIGURE 5 is a top plan view of an alternative form of a web of record members from the one shown in FIGURES 1 through 4;
FIGURE 6 is a pictorial diagrammatic view illustrating how the composite web of circuit-containing record members can be made;
FIGURE 7 is an elevational diagrammatic view illustrating a method of making record members;
FIGURE 8 is a pictorial view illustrating representative structure for accomplishing advance and severing of the circuit-containing webs and their application to a carrier web;
FIGURE 9 is a pictorial view showing some of the same structure as in FIGURE 8 from a different vantage point;
FIGURE 10 is a developed view showing first and second webs of dissimilar circuits, for example, transponders, motionless, and with the endmost circuit of each web having a leading edge at a cut line;
FIGURE 11 is a developed view similar to FIGURE 10, but showing the first web as advancing beyond the cut line and showing the leading edge of the leading circuit of the second web at the cut line;
FIGURE 12 is a developed view similar to FIGURES 10 and 11, but showing both the first and second webs advancing beyond the cut line;
FIGURE 13 is a developed view similar to FIGURES 10 through 12, but showing the first web advancing beyond the cut line and showing the second web stopped except the leading circuit of the second web being cut from the second web at the cut line and advancing in unison with the leading circuit of the first web;
FIGURE 14 is a developed view similar to FIGURES 10 through 13, but showing the first web as advancing with the severed leading circuit of the second web advancing in unison with the leading circuit of the first web; and
FIGURE 15 is a developed view similar to FIGURES 10 through 14, but showing the first and second webs as stopped and the leading circuit of the first web being severed from the remainder of the first web, and with the leading circuits of the first and second webs continuing to advance in unison with each other.

### Detailed Description of the Preferred Embodiments

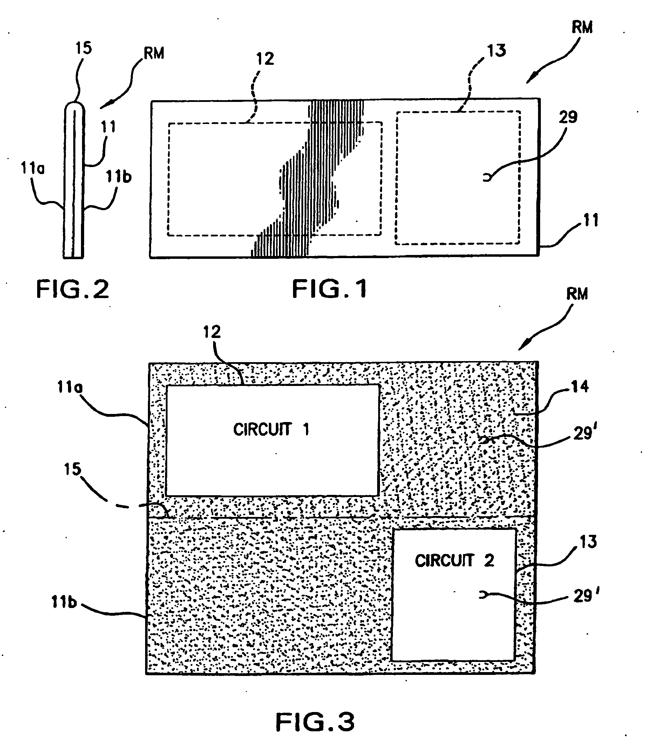

With reference to FIGURE 1 through 3, there is shown a record member generally indicated at RM such as a tag 11 having circuits 12 and 13. The circuits 12 and 13 can comprise RFID and/or EAS transponders. The tag 11 is comprised of tag stock which has a uniform coating of pressure sensitive or tacky adhesive 14 indicated by stippling. FIGURE 3 shows that circuits 12 and 13 are adhered or applied onto the adhesive 14 at respective tag portions 11a and 11b. The tag portions 11a and 11b are connected at a fold line 15 about which the tag portions 11a and 11b can be folded so that the circuits 12 and 13 can be held captive in sandwiched relationship between the tag portions 11a and 11b as shown in FIGURES 1 and 2. If desired, pressure sensitive or tacky adhesive can be applied over the circuits 12 and 13. While the circuits 12 and 13 are staggered with respect to the long dimension of the tag 11, the circuits are considered to be registered with each other in side-by-side relationship. It is shown that the circuits 12 and 13 can be offset or staggered with respect to each other so that when the tag portion 11a and 11b are folded about the fold line 15, one circuit such as the circuit 12, referenced as CIRCUIT 1, does not overlap the other circuit such as the circuit 13, referenced as CIRCUIT 2, which may interfere with the responsiveness or operability of one or both of such circuits. The circuits 12 and 13 may have the same or different characteristics. For example, the circuit 12 can be a radio frequency identification (RFID) transponder of the Ultra High Frequency (UHF) type or of the High Frequency (HF) type and the circuit 13 may be an electronic article surveillance (EAS) transponder, all of which are individually known in the art. Alternatively, both circuits 12 and 13 can be RFID circuits or transponders of either the UHF or HF type. Each of the tag portions 11a and 11b preferably has a chadless or incompletely cut hole 29'. When the tag portions 11a and 11b have been folded about fold line 15 upon each other, the holes 29' are aligned as shown in FIGURE 1 to provide an attacher hole 29. The attacher hole 29, can receive a plastic fastener to hang the tag 11 onto, for example, a garment. The attacher hole 29 in the circuit 13 is located to avoid damaging the circuit 13.

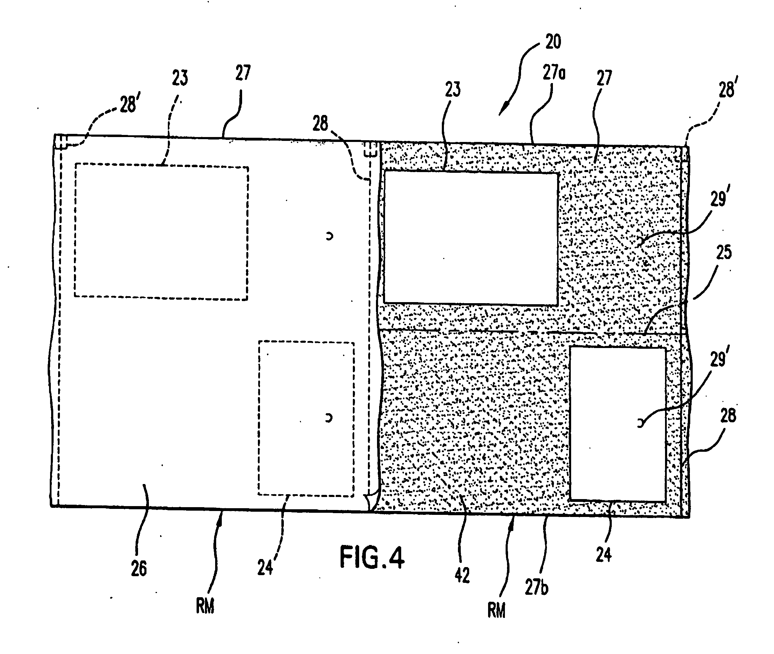

FIGURE 4 illustrates a method by which completed tags of the type shown in FIGURES 1 and 2 can be made. FIGURE 4 shows a composite web generally indicated at 20 including record members RM with a printable tag web 21 having a uniform coating of pressure sensitive or tacky adhesive 22. Circuits 23 and 25 can correspond in type and description to circuit 12 and 13 respectively, shown in FIGURES 1 and 3. As shown in FIGURE 4, the circuits 23 and 24 are offset or staggered as in FIGURES 1 and 3. There is a longitudinally extending fold line 25. Laminated to the tag web 21 is a web of a release liner 26 having a uniform coating of a release material such as silicone on its underside. Individual record members RM can be printed on the face side of the web 21 and cut along lines of complete severing 28. Registration marks 28' on the adhesive side of the web 21 can be used to register the circuits 23 and 24 with the tags 27 during manufacture. Following peeling of a tag 27 from the composite web 20, tag parts 27a and 27b can be folded along their fold line 25 to complete the tag 27.

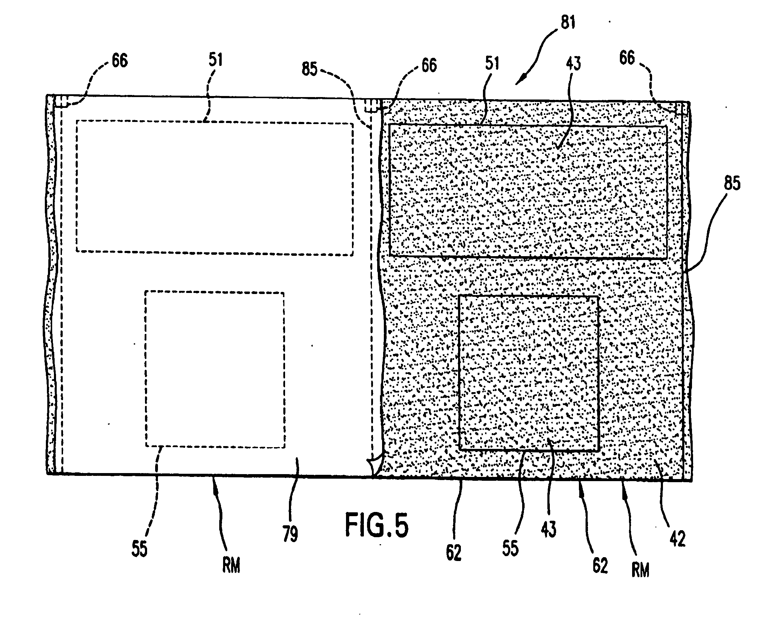

FIGURE 5 shows a composite record member web generally indicated at 81. Unlike the tag 11 of the embodiment of FIGURES 1 through 4, the tag or label embodiment of FIGURES 5 through 15 is preferably not folded. The composite web 81 can comprise a record member RM of either tag or label carrier web 62, preferably coated with a uniform coating of pressure sensitive or tacky adhesive 42. Circuits 51 and 55 adhere to the adhesive 42 on the web 62 and adhesive 43 is applied over the circuits 51 and 55. In the event the web 62 is comprised of label material, the record members RM are preferable completely severed along lines of severing 85 through registration marks 66. In the event the web 62 is comprised of tag stock, the record members RM may be partially severed along lines 85 or not severed to any extent at all. When the record members RM are not severed during manufacture, the record members RM can be printed and then severed in a printer.

The circuits 51 and 55 in the disclosed embodiments can be of the various types mentioned hereinabove. The circuits 51 and 55 of the disclosed embodiments are shown to be dissimilar or different from each other, and specifically in one preferred embodiment the circuit 51 can be a UHF RFID circuit or transponder and the circuit 55 can be an EAS circuit or transponder of various known types include magnetic, electromagnet, vibratory or microwave. As shown, the circuits 51 and 55 have different shapes. Alternatively the circuits such as 51 and 55 can be UHF and/or HF circuits or transponders.

In the event the record member web 62 is a label web, then the carrier web 62 is comprised of label material having the coating of adhesive 42, and another carrier web 79 is a release liner having a release coating such as silicone and preferably patterned adhesive in zones as described hereinafter. Because the release material on the web 79 is against the adhesive, the record member RM can be peeled from the carrier web 79 before application of the label 44 to a product.

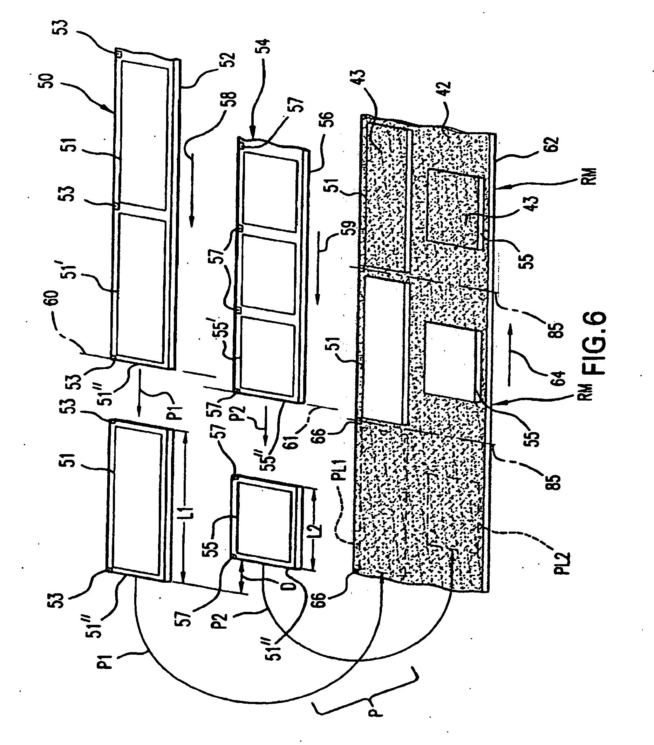

The record members RM of the disclosed embodiments can be made by the embodiment disclosed in FIGURES 6 through 15. With reference to FIGURE 6, there is shown a circuit web 50 comprised of desired circuits 51. The web 50 is comprised of a web or film 52 on which the circuits 51 are disposed at equally spaced locations longitudinally along the web 52. The web 50 has registration marks 53 at equally spaced apart locations along the web 50. There is also shown a circuit web 54 comprised of desired circuits 55. The web 54 is comprised of a web or film 56 on which the circuits 55 are disposed at equally spaced apart locations along the web 54. The web 54 has registration marks 57 at equally spaced apart locations along the web 54. The circuits 51 and 55 can be advanced along a path P which includes a path P1 for the circuits 51 and a path P2 which includes a path P2 for the circuits 55. The paths P1 and P2 are preferably adjacent or closely spaced laterally or transversely. The advance of the webs 50 and 54 is preferably intermittent. When the webs 50 and 54 advance, they advance separately and individually in the directions shown by arrows 58 and 59. The circuits 51 and 55 are shown to be of different sizes and they can take different shapes. The endmost circuits 51' or 55' can be severed from the remainder of their respective webs 50 or 54 along lines of severing 60 and 61.

When the endmost circuit 51' has been severed along the line of complete severing 60, the movement of the web 50 is stopped. When the endmost circuit 55' has been severed along the line of severing 61, the movement of the web 54 is stopped. The lines of severing 60 and 61 may coincide as is preferred or they may be spaced as shown. However, the severing of the circuits 51 and 55 may be done individually. After the endmost or leading circuits 51' and 55' have been severed, they are passed along respective paths P1 and P2 and applied to a carrier web 62. The carrier web 62 can have a coating of pressure sensitive or tacky adhesive 42. The circuits 51 and 55 are applied in the locations or footprints shown by dot-dash lines PL1 and PL2, respectively. As the web 62 moves to the right as shown in FIGURE 6 in the direction of arrow 64, the last applied circuits 51 and 55 are shown adhesively adhered to the moving web 62, but those circuits do not have adhesive on their upper sides as shown. Next, adhesive 43 is applied to those circuits 51 and 55. As shown, the circuits 51 and 55 are arranged in side-by-side sets of two circuits 51 and 55. The circuits 51 and 55 of each set are registered with each other. The sets of circuits 51 and 55 are disposed at equally spaced apart locations along the web 62. The sets of circuits 51 and 55 are registered with registration marks 66 on the adhesive side of the web 62. As in all of FIGURES 1 through 9, the adhesive 14 and 42 are either transparent or translucent enough so that the registration marks 28' and 66 can be readily sensed by sensing equipment (not shown).

As the web 62 moves in the direction of the arrow 64, either a web of tag stock can be laminated to the web 62 in the event the record members RM are to be tags or a release liner 79 can be laminated to the web 62, as shown, in the event the record members RM are to be labels.

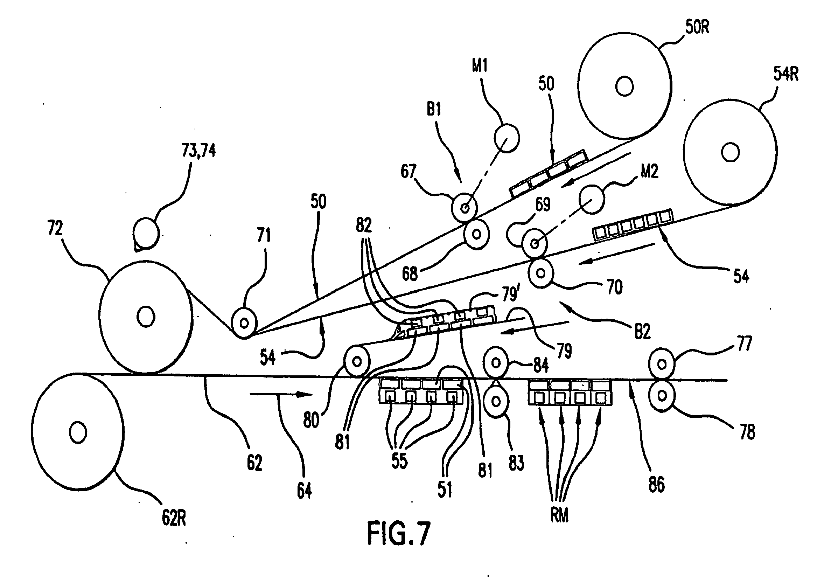

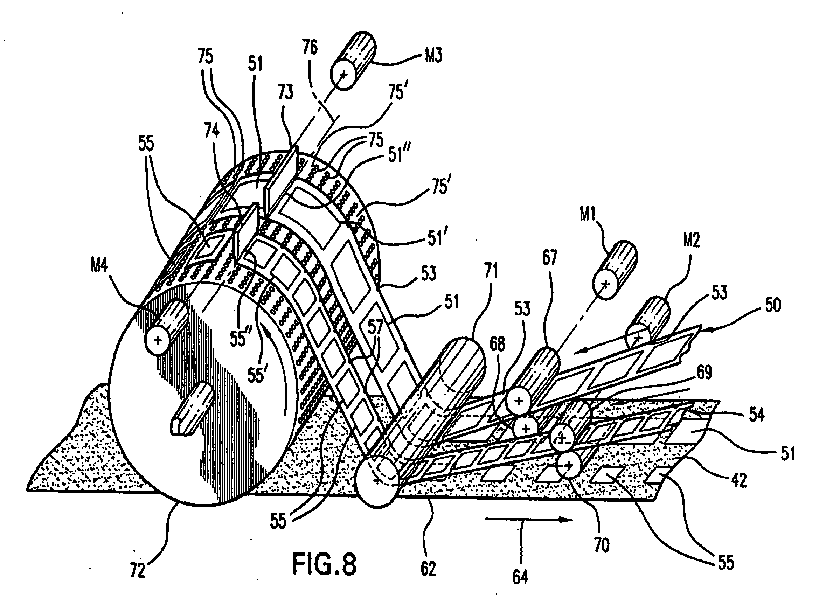

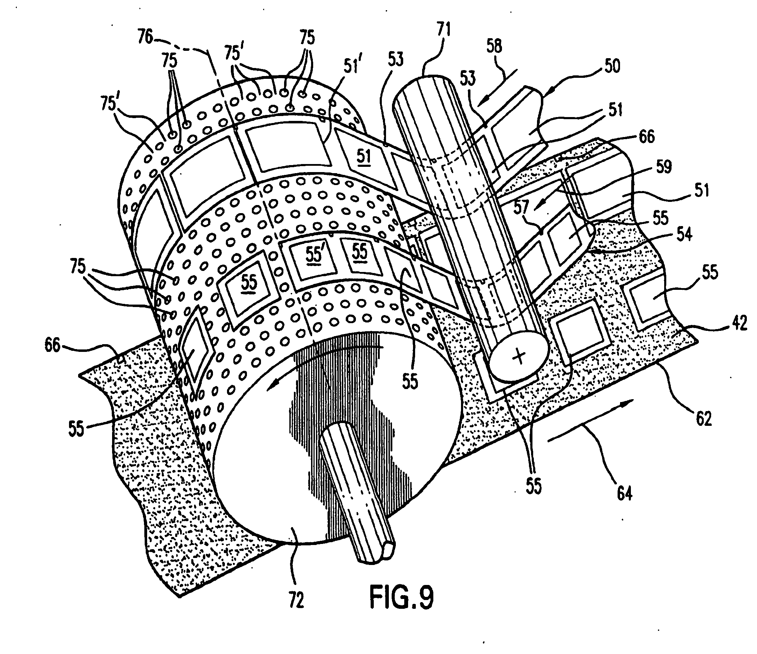

With reference to the embodiment of FIGURES 7 through 15, and initially with reference to FIGURE 7, the circuit web 50 is shown to have been wound into a roll 50R and the circuit web 54 is shown to have been wound into a roll 54R. The web 50 passes from the roll 50R to a brake B1 which may be comprised of cooperating rolls 67 and 68. The roll 68 can be an idler roll and the roll 67 can be a brake roll which cooperates with the roll 68 to apply braking force intermittently to the web 50. The web 54 passes from the roll 54R to a brake B2 which may be comprised of cooperating rolls 69 and 70. The roll 70 can be an idler roll and the roll 69 can be a brake roll which cooperates with the roll 70 to applying braking force intermittently to the web 54. The webs 50 and 54 pass from there to and partially about a direction changing roll 71 and from there onto a vacuum drum 72. The drum 72 rotates continuously during production. The drum 72 exerts vacuum on the undersides of the webs 50 and 54 and in this way attempts to advance or feed the web 50 and 54. However, because the brake B1 prevents advance or feeding of the web 50, the web 50 slips on the drum 72 as the drum 72 rotates and, accordingly, the drum 72 rotates but the web 50 does not advance. Similarly, because the brake B2 prevents advance or feeding of the web 54, the web 54 slips on the drum 72 as the drum 72 rotates and, accordingly, the drum 72 rotates but the web 54 does not advance. The rolls 67 and 69 can be controlled by motors M1 and M2, respectively. The motors M1 and M2 can be servomotors, if desired. The motors M1 and M2 are individually and selectively operable either to allow the rolls 67 and/or 69 to rotate or to apply braking force to the webs 50 and/or 54, which in turn allows the webs 50 and/or 54 to be advanced by the rotating drum 72. Because the webs 50 and 54 are illustrated to have different pitches, knives 73 and 74 (FIGURES 7, 8 and 9) are individually and selectively operable to cut the webs 50 and 54 at different times. The knives 73 and 74 are preferably rotary knives, although in FIGURES 8 and 9 the knives 73 and 74 are shown diagrammatically as blades. The knives 73 and 74 cooperate selectively with the drum 72 to sever the webs 50 and 54, respectively. The drum 72 has spaced holes 75 which extend both axially in rows and peripherally in columns of the drum 72, and there are land areas 75' between the rows of holes 75 peripherally. The knives 73 and 74 can cooperate with the land areas 75' to sever the endmost circuits 50' and 54' from the respective webs 50 and 54. The rotary knife 73 is controlled by a motor M3 and the rotary knife 74 is controlled by a motor M4. The motors M3 and M4 that control the knives 73 and 74, and the motors M1 and M2 that control the brakes B1 and B2 are so timed that the endmost circuits 51' and 55' are severed from the end portion of the web 50 and 55 at the precise times so that the severed circuits 51 and 55 are advanced in sets of two or more circuits for each record member of which they are to form a part. This is shown in FIGURE 9, for example, where the circuits 51 and 55 are shown to be arranged in side-by-side pairs of circuits. This means that when the leading edge 51" of an endmost circuit 51' is at a cut line 76, the brake B1 can be released to enable the endmost circuit 51' to be fed by a distance equal to pitch P1 at which time the knife 73 cuts one circuit 51 from the web 50. Similarly, when the leading edge 55" of an endmost circuit 55' is at the cut line 76, the brake B2 is released to enable the endmost circuit 55' to be fed by a distance equal to one pitch P2 at which time the knife 74 cuts one circuit 55 from the web 54.

As shown for example in FIGURE 9, the circuits 51 and 55 are shown to be arranged in side-by-side pairs of registered circuits 51 and 55. This means that with the endmost circuits 51' and 55' at cut line 76, the brake B1 is released first to enable the drum 72 to feed the web 50. When the endmost circuit 51' has moved a distance D, the brake B2 is released to also allow advance of the web 54. The distance D is the distance the leading edge 51' of the leading circuit 51" is spaced ahead of the leading edge 55" of the leading circuit 55'. Since the pitch L2 of the circuit 55 is less than the pitch L1 of the circuit 51, the brake B2 is applied before the brake B1 is applied. The knife 74 cuts the leading circuit 55' from the web 54 at the same time as the brake B2 stops advance of the web 54. After continued advance of the web 50 during advance of the drum 72, the knife 73 cuts the leading circuit 51' from the web 50 at the same time as the brake B2 stops advance of the web 50. Now both webs 50 and 54 are stopped. Because the drum 72 continues to rotate, the just severed leading circuits 51' and 55" travel in unison or registry as a unit or set adhered to the drum 72 by vacuum.

By controlling the timing of the operation of the brake motors M1 and M2 and the knife operating motors M3 and M4, the registration of the circuits 51 and 55 with respect to each other in sets can be effected. Thus, the circuits 51 and 55 can have any arrangement with respect to each other as desired. For example, if the pitch L1 of the circuits 51 were greater than the pitch L2 of the circuits 55, as in FIGURES 1 through 15, but the leading edges 51" and 54" were required to be aligned, then brakes B1 and B2 would release the respective webs 50 and 54 at the same time. When the web 54 traveled a distance equal to the pitch L2 of the circuits 55, then the knife 74 would be operated to sever the leading circuit 55' from the web 54 and the brake B2 would stop advance of the web 54, and when the web 50 traveled a distance equal to the pitch L1 of the circuits 51, then the knife 73 would operate to sever the leading circuit 51' from the web 50 and the brake B1 would stop advance of the web 50. Because the pitch L2 is less than the pitch L1, the knife 74 would, accordingly, sever the endmost circuit 55' before the knife 73 would sever the endmost circuit 51'.

The synchronization of the brake B1 with the knife 73 and the synchronization of the brake B2 with the knife 74 and the synchronization of the knives 73 and 74 and the brakes B1 and B2 with each other results in the endmost circuits 51' and 55' being severed at just the right time to provide sets of circuits 51 and 55 wherein the circuits 51 and 55 of each set are registered with each other and the spacing of sets is equal from set-to-set. It is apparent that once one set of circuits 51 and 55 is cut by the knives 73 and 74, the next set of circuits follows at such times as is desired to space the next set the desired distance from the immediately previous set. The record members RM are preferably the same length. The record members RM can extend from the center of one registration mark 66 to the center of the next adjacent registration marks 66.

The drum 72 preferably operates at the same peripheral speed as the speed of advance of the web 62. The web 62 is drawn from a roll 62R by motor-driven feed rolls 77 and 78, one of which can be an idler roll. As the vacuum roll 72 is rotated and the leading set of circuits 51 and 55 nears the web 62, the vacuum can be reversed for that leading set of circuits 51 and 55, so that the leading circuits are preferably blown onto the adhesive coated web 62. As the drum 72 rotates further, the next set of circuits 51 and 55 nears the web 62 and that next set of circuits 51 and 55 is blown onto the web 62, in registry with the set of circuits 51 and 52 previously applied to the web 62, and so on. As the web 62 advances, a release liner 79 may pass about a roll 80 and is applied or laminated to the surface of the web 62, thereby trapping the circuits 51 and 55 between the web 79 and the web 62. The laminated webs 62 and 79 thus form a composite circuit web 86 of record members RM. The release liner 79 can have a patterned coating of pressure sensitive or tacky adhesive 43 in zones 81 and 82. The web 79 can be registered with the web 62 using registration marks 79' and 66 on the webs 79 and 62, respectively. The adhesive zones 81 and 82 are aligned with respective circuits 51 and 55 and have similar sizes and shapes except the adhesive zones 81 and 82 may be slightly larger than the respective circuits 51 and 55. In this way, when the webs 62 and 79 are laminated to each other, the adhesive 43 at adhesive zones 81 and 82 is transferred onto the circuits 51 and 55. Accordingly the entire surface of one face of the web 62 as well as the circuits 51 and 55 are covered with pressure sensitive adhesive. As the web 62 and the web 79 which is laminated to the web 62 advance, the label material of which the web 62 is comprised is cut at equally spaced intervals at 85 by a knife 83 without cutting through the release liner 79, thereby forming record members RM in the form of labels releaseably adhered to the carrier web 79. The knife 83 can cooperate with a roll 84 to make the cuts or severing 85 on the web 62. The composite web 86 of record members RM thus formed can be advanced and wound into a roll (not shown). The composite web 86 of record members RM thus formed is shown in FIGURE 5. In the event the web 86 shown in FIGURES 5 through 9 is to be a tag web of record members RM, then the web 79 is comprised of tag stock and the adhesive zones 81 and 82 and the registration marks 79' are unnecessary. The tag stock can simply be laminated to a tag web 62.

Application of the circuits 51 and 55 to the web 62 using the drum 72 results in the circuits being turned up-side-down; if desired, the circuits 51 and 55 can be transferred directly downwardly without inversion by a reciprocating applicator head.

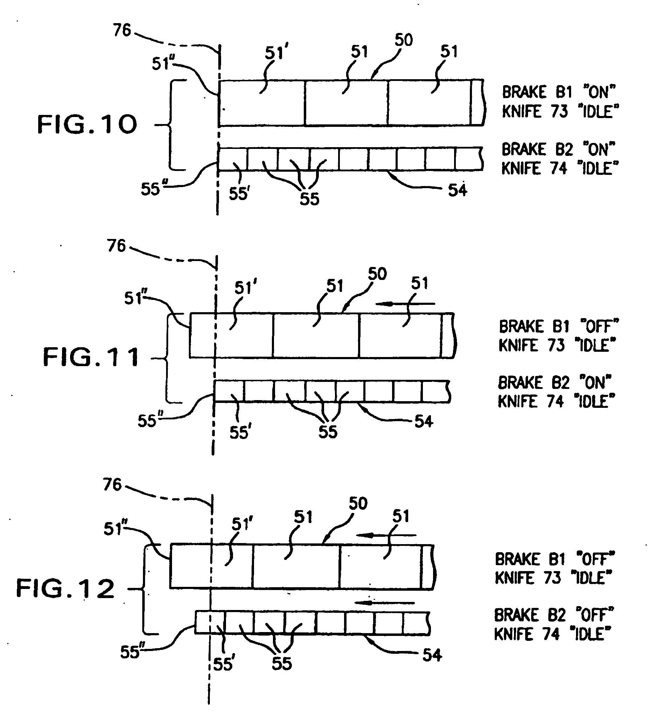

FIGURES 10 through 15 show diagrammatically the manner in which the circuits of FIGURES 5 through 9 are manipulated. Referring initially to FIGURE 10, the webs 50 and 54 are shown to be at rest or motionless. Such a condition can exist at the beginning of production as well as during label manufacture. Starting with the leading ends on edges 51" and 55" of the leading circuits 51' and 55' of the respective webs 50 and 54 at the cut line 76, the brakes B1 and B2 are "ON", that is, applying braking force and the knives 73 and 74 are "IDLE" or not cutting. Because the circuits 51 and 55 are to be in the pattern illustrated in FIGURES 5 through 9, the brake B1 is released first.

FIGURE 11 shows the brake B1 as having been released or "OFF" so that the drum 72 can advance the web 50. As shown, the brake B2 is "ON", that is, applying braking force and, of course, the drives 73 and 74 are "IDLE" or not cutting. FIGURE 11 shows the leading edge 51" as having advanced far enough so that the web 54 can start advancing, thereby assuring that the leading labels 51' and 55' are registered with each other.

FIGURE 12 shows that the advance of the web 54 has been started and the web 54 continues to advance as the web 50 continues to advance. The speed of advance matches the peripheral speed of the drum 72. As seen, the brakes B1 and B2 are "OFF" and the knives 73 and 74 are idle.

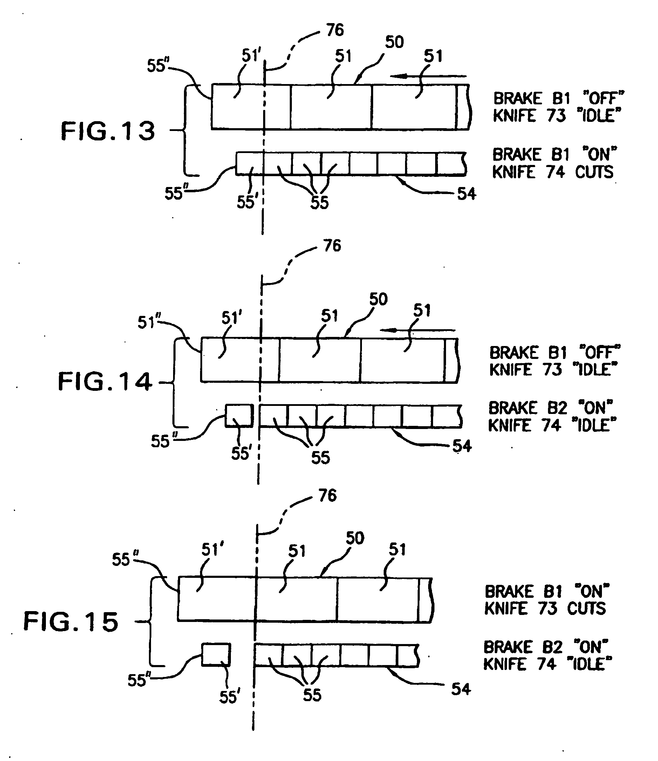

FIGURE 13 shows the web 50 continuing to advance so the brake B1 continues to be "OFF", but the web 54 has reached the position where the leading circuit 51 and 55 are registered with each other and the knife 74 is operated and the brake B2 is "ON". The brake B1 continues to be "OFF" and the knife 73 is "IDLE".

FIGURE 14 shows the web 50 continuing to advance so the brake B1 is "OFF". The now-severed leading circuit 51 continues to be advanced by the drum, but the web 54 is motionless because the brake B2 is "ON". The knife 73 is still "IDLE".

FIGURE 15 shows the trailing end or edge of the leading circuit 51' as having reached the cut line 76 and the brake B1 has been operated to apply braking force to the web 50, that is, the brake B1 is "ON". Also the knife 73 cuts the leading circuit 51' from the web 50. It is noted in FIGURE 15 that the leading circuit 55' has continued to be advanced in registry or unison or synchronism with the leading circuit 51' on the drum 72. In that both circuits 51' and 55' have now been cut from their respective webs 50 and 54, the next set of circuits 51 and 55 is ready to be advanced and cut into sets of registered circuits 51 and 55. The timing of the start of the next cycle depends on the desired spacing between sets of circuits 51 and 55.

The circuits 55 are shown to be narrower in width in FIGURES 8 through 15 than in FIGURES 5 and 6, but this makes no difference in the practice of the method.

While the embodiments are shown and described with respect to two webs of circuits and webs of record members having two circuits per record member, three or more webs of circuits can be used to produce record members with three or more circuits per record member.

If desired, the composite web 86 of record members RM can be severed longitudinally between laterally adjacent circuits 51 and 55 to provide two narrow webs, wherein one resulting narrow web would be comprised of circuits 51 and the other resulting narrow web would be comprised of circuits 55.

By way of example, not limitation, an embodiment of a UHF circuit in particular a transponder useful in the present embodiment of FIGURE 1 through 9 is disclosed in Rafsec Web Dry Inlay, Global UHF CIG2 EPC, Sales Code 3000857 Preliminary Product Specification 2006-06-26, www.upmrafatec.com; an embodiment of an EAS circuit in particular a transponder useful in the present embodiment is disclosed in All-Tag Security S.A. 2x3 Specification Sheet, www.alltag-security.com; and an embodiment of a HF circuit in particular a transponder useful in the present embodiment of FIGURES 1 through 9 is disclosed in Texas Instruments Tag-it HF-I Transponder Inlays Reference Guide 11-09-21-053, May 2002.

## Claims

1. Method of making composite webs of record members, comprising:
providing a longitudinally spaced first supply of first circuits (51) and a longitudinally spaced second supply of second circuits (55), wherein the first and second circuits (51, 55) have different pitches (L1, L2),
bringing sets of endmost ones (51', 55') of each of the first and second circuits into registration with each other so that the circuits (51', 55') of each set are registered with each other,
advancing the registered sets along a path (P1, P2, 64), and
adhering the registered sets to a carrier web (62) at locations (66) along the carrier web.

2. Method as defined in claim 1,
wherein providing the first and second supplies of first and second circuits includes providing at least first and second longitudinally extending webs (50, 54), wherein each first and second web includes a series of circuits (51 or 55), wherein the circuits (51) of the first web (54) differ in longitudinal pitch from the circuits (55) of the second web (54).

3. Method as defined in claim 2,
wherein bringing the endmost circuits (51', 55') into registration includes severing the endmost first and second circuits of each of the first and second webs (50, 54) in a set when the endmost first and second circuits are registered with each other.

4. Method as defined in either claim 2 or claim 3, including
simultaneously applying a braking force to each of the first and second webs (50, 54), and
releasing the braking forces selectively to cause feeding of the first and second webs to knives (73, 74) that effect severing of the endmost circuits (51', 55') from the first and second webs.

5. Method as defined in either claim 2 or claim 3, wherein the step of advancing the sets includes advancing the first and second webs (50, 54) using at least one vacuum drum (72),
selectively holding and releasing the first and second webs individually,
wherein the first and second webs slip on the vacuum drum or drums until the first and second webs are released, and
selectively releasing the first and second webs for severing of endmost circuits (51', 55') in registration with each other.

6. Method as defined in either claim 2 or claim 3, including
providing at least one vacuum drum (72), and
severing of the first and second webs is performed by separate knives (73, 74) cooperating with the vacuum drum or drums.

7. Method as defined in any one of claims 1 through 6,
wherein adhering the sets to the carrier web includes adhering the sets adhesively.

8. Method as defined in any one of claims 1 through 7,
wherein the first circuits comprise RFID transponders and the second circuits comprise EAS transponders.

9. A composite web (81) made by the method defined in any one of claims 1 through 8.

## Patentansprüche

1. Verfahren zur Herstellung von Komposit-Bahnen von Aufzeichnungselementen, umfassend:
Bereitstellen eines longitudinal beabstandeten ersten Vorrats erster Schaltungen (51) und eines longitudinal beabstandeten zweiten Vorrats zweiter Schaltungen (55), wobei die ersten und die zweiten Schaltungen (51, 55) unterschiedliches Abstandsmaß (L1, L2) besitzen,
Bringen von Mengen endständiger (51', 55') jeder der ersten und zweiten Schaltungen in gegenseitige Ausrichtung, sodass die Schaltungen (51', 55') jeder Menge zueinander ausgerichtet sind,
Vorrücken der ausgerichteten Mengen längs eines Pfads (P1, P2, 64) und
Aufbringen der ausgerichteten Mengen auf eine Trägerbahn (62) an Stellen (66) längs der Trägerbahn.

2. Verfahren nach Anspruch 1,
wobei das Bereitstellen des ersten und des zweiten Vorrats erster und zweiter Schaltungen ein Bereitstellen zumindest einer ersten und einer zweiten longitudinal sich erstreckenden Bahn (50, 54) umfasst, wobei die erste und die zweite Bahn jeweils eine Reihe von Schaltungen (51 oder 55) aufweisen, wobei die Schaltungen (51) der ersten Bahn (54) hinsichtlich eines longitudinalen Abstandsmaßes sich von den Schaltungen (55) der zweiten Bahn (54) unterscheiden.

3. Verfahren nach Anspruch 2,
wobei das Bringen der endständigen Schaltungen (51', 55') in Ausrichtung ein Abtrennen der endständigen ersten und zweiten Schaltung jedes des ersten und zweiten Bands (50, 54) als eine Menge umfasst, wenn die endständige erste und zweite Schaltung zueinander ausgerichtet sind.

4. Verfahren nach Anspruch 2 oder Anspruch 3, umfassend:
gleichzeitiges Aufbringen einer Bremskraft auf jede der ersten und zweiten Bahn (50, 54), und
selektives Aufheben der Bremskräfte, um eine Zufuhr der ersten und zweiten Bahn zu Messern (73, 74) zu bewirken, welche eine Abtrennung der endständigen Schaltungen (51', 55') von der ersten und zweiten Bahn bewirken.

5. Verfahren nach Anspruch 2 oder 3,
wobei der Schritt des Vorrückens der Mengen ein Vorrücken der ersten und zweiten Bahn (50, 54) unter Verwendung mindestens einer Vakuumtrommel (52), ein selektives individuelles Halten und Freigeben der ersten Bahn, wobei die erste und zweite Bahn auf der Vakuumtrommel oder auf Vakuumtrommeln rutschen, bis die erste und zweite Bahn freigegeben werden, und ein selektives Freigeben der ersten und zweiten Bahn zur Abtrennung der endständigen Schaltungen (51', 55') in gegenseitiger Ausrichtung umfasst.

6. Verfahren nach Anspruch 2 oder 3, umfassend ein Bereitstellen mindestens einer Vakuumtrommel (72), wobei das Abtrennen der ersten und zweiten Bahn mittels separater Messer (73, 74) durchgeführt wird, welche mit der Vakuumtrommel oder den Vakuumtrommeln zusammenwirken.

7. Verfahren nach einem der Ansprüche 1 bis 6,
wobei das Aufbringen der Mengen auf die Trägerbahn ein klebendes Aufbringen der Mengen umfasst.

8. Verfahren nach einem der Ansprüche 1 bis 7,
wobei die ersten Schaltungen RFID-Transponder umfassen und die zweiten Schaltungen EAS-Transponder umfassen.

9. Komposit-Bahn (81), welche mittels des Verfahrens nach einem der Ansprüche 1 bis 8 hergestellt ist.

## Revendications

1. Procédé de fabrication de bandes composites d'éléments d'enregistrement, comprenant les étapes consistant à :
fournir un premier approvisionnement de premiers circuits (51) espacés de manière longitudinale et un second approvisionnement de seconds circuits (55) espacés de manière longitudinale, dans lequel les premiers et seconds circuits (51, 55) possèdent des pas différents (L1, L2),
amener les ensembles de ceux situés le plus à l'extrémité (51', 55') de chacun des premiers et seconds circuits en enregistrement les uns avec les autres de sorte que les circuits (51', 55') de chaque ensemble sont enregistrés les uns avec les autres,
avancer les ensembles enregistrés le long d'un trajet (P1, P2, P64), et
coller les ensembles enregistrés à une bande de support (62) à des emplacements (66) le long de la bande de support.

2. Procédé selon la revendication 1,
dans lequel fournir les premier et second approvisionnements des premiers et seconds circuits consiste à fournir au moins des premières et secondes bandes s'étendant de manière longitudinale (50, 54), dans lequel chaque première et seconde bande comprend une série de circuits (51 ou 55), dans lequel les circuits (51) de la première bande (54) possèdent un pas longitudinal différent des circuits (55) de la seconde bande (54).

3. Procédé selon la revendication 2,
dans lequel amener les circuits situés le plus à l'extrémité (51', 55') en enregistrement consiste à couper les premiers et seconds circuits situés le plus à l'extrémité de chacune des premières et secondes bandes (50, 54) dans un ensemble lorsque les premiers et seconds circuits situés le plus à l'extrémité sont enregistrés les uns avec les autres.

4. Procédé selon la revendication 2 ou la revendication 3, comprenant les étapes consistant à :
appliquer simultanément une force de freinage à chacune des premières et secondes bandes (50, 54), et
libérer les forces de freinage de manière sélective en vue d'entraîner la fourniture des premières et secondes bandes vers les lames (73, 74) qui effectuent la coupe des circuits situés le plus à l'extrémité (51', 55') à partir des premières et secondes bandes.

5. Procédé selon la revendication 2 ou la revendication 3, dans lequel l'étape consistant à avancer les ensembles consiste à avancer les premières et secondes bandes (50, 54) à l'aide d'au moins un tambour à dépression (72),
retenir et libérer de manière sélective les premières et secondes bandes individuellement,
dans lequel les premières et secondes bandes glissent sur le tambour ou les tambours à dépression jusqu'à ce que les premières et secondes bandes soient libérées, et
libérer de manière sélective les premières et secondes bandes en vue de couper les circuits situés le plus à l'extrémité (51', 55') en enregistrement les uns avec les autres.

6. Procédé selon la revendication 2 ou la revendication 3, comprenant les étapes consistant à :
fournir au moins un tambour à dépression (72), et
couper les premières et secondes bandes, ce qui est effectué par des lames séparées (73, 74) coopérant avec le tambour ou les tambours à dépression.

7. Procédé selon l'une quelconque des revendications 1 à 6,
dans lequel coller les ensembles à la bande de support consiste à coller les ensembles de manière adhésive.

8. Procédé selon l'une quelconque des revendications 1 à 7,
dans lequel les premiers circuits comprennent des transpondeurs RFID et les seconds circuits comprennent des transpondeurs EAS.

9. Bande composite (81) fabriquée par le procédé défini selon l'une quelconque des revendications 1 à 8.
